(19) Europäisches Patentamt
European Patent Office
Office européen des brevets

(11) Veröffentlichungsnummer: **0 311 914**
**A2**

(12) # EUROPÄISCHE PATENTANMELDUNG

(21) Anmeldenummer: **88116610.2**

(22) Anmeldetag: **07.10.88**

(51) Int. Cl.⁴: **C08K 5/34 , C08L 23/02 , //(C08L23/02,C08K5:34)**

(30) Priorität: **10.10.87 DE 3734385**

(43) Veröffentlichungstag der Anmeldung: **19.04.89 Patentblatt 89/16**

(84) Benannte Vertragsstaaten: **CH DE FR GB LI**

(71) Anmelder: **HOECHST AKTIENGESELLSCHAFT**
**Postfach 80 03 20**
**D-6230 Frankfurt am Main 80(DE)**

(72) Erfinder: **Dietz, Erwin, Dr.**
**St.-Matthäus-Strasse 7**
**D-6233 Kelkheim (Taunus)(DE)**
Erfinder: **Schiessler, Siegfried, Dr.**
**Rother Weingartenweg 48**
**D-6232 Bad Soden am Taunus(DE)**

(54) **Verwendung der alpha-Modifikation von cis-Naphthoylen-bis-benzimidazol zum Pigmentieren von Polyolefinen.**

(57) Die α-Modifikation des cis-Naphthoylen-bis-benzimidazols ist in vielen Medien instabil und fand deshalb bisher nur als Küpenfarbstoff Verwendung. Erfindungsgemäß ist jedoch die α-Modifikation gut zum Pigmentieren von Polyolefinen, wie Polyethylen, Polypropylen oder analogen Mischpolymerisaten, in der Masse verwendbar. Das Pigment, welches in üblicher Weise hergestellt wird, bleibt dabei modifikationsstabil und ergibt farbstarke rote Färbungen.

EP 0 311 914 A2

## Verwendung der α-Modifikation von cis-Naphthoylen-bis-benzimidazol zum Pigmentieren von Polyolefinen

Bei der Umsetzung von Naphthalin-1,4,5,8-tetracarbonsäure mit 1,2-Diaminobenzol fällt neben dem trans-Isomeren von Naphthyolen-bis-benzimidazol zwangsläufig auch das cis-Isomere der Formel (I) an

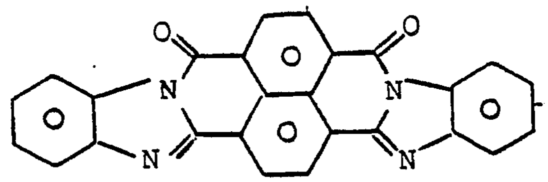

(I)

Während das trans-Isomere sowohl als Pigment (C.I. Pigment Orange 43) als auch als Küpenfarbstoff (C.I. Vat Orange 7) von sehr großer wirtschaftlicher Bedeutung ist, hat das cis-Isomere (C.I. Vat Red 15) eine geringere wirtschaftliche Bedeutung. Das cis-Isomere fällt bei dem üblichen Isomeren-Trennverfahren in Form einer Lösung seiner Kaliumhydroxid-Additionsverbindung in wäßriger Kalilauge an und wird daraus durch Säurezugabe ausgefällt und isoliert. Es fällt dabei, wie in der DE-A-20 39 465 (US-A-3,772,303) beschrieben, in der äußerst phaseninstabilen α-Modifikation an, die deshalb bisher nur als Küpenfarbstoff Verwendung fand. Wie aus der DE-A-20 39 465 (US-A-3,772,303) bekannt ist, wird die α-Modifikation sowohl durch die Einwirkung organischer Lösemittel als auch durch Erhitzen in Wasser in die phasenstabilere β-Modifikation umgewandelt. Die Instabilität der α-Modifikation läßt sich auch beim Erhitzen in Paraffinöl feststellen. So beginnt die Umlagerung in die β-Modifikation bereits bei 100 °C und erfolgt eine weitgehende Umwandlung in die β-Modifikation bereits bei kurzzeitigem Erhitzen auf 200 °C. Ein phaseninstabiles Pigment, bei dem während der Verarbeitung eine Modifikationsumwandlung einhergeht, führt in der Regel zu einer Farbtonverschiebung, zu Verlusten an Farbstärke und zum Auftreten trüber Färbungen. Beim Pigmentieren von Polyolefinen in der Masse sind normalerweise Verarbeitungstemperaturen von 200 bis 270 °C nötig. Da hohe Temperaturen die Geschwindigkeit von Phasenumwandlungen in der Regel erhöhen, erscheint die Verwendung der phaseninstabilen α-Modifikation als Pigment zum Pigmentieren von Polyolefinen nicht geeignet und ist eine derartige Verwendung auch bisher nicht empfohlen worden oder bekannt. Auch im Falle der DE-A-28 09 877 (US-A-4,181,805), die u.a. in den Beispielen 6 und 7 das Pigmentieren von Polyolefinen mit der Verbindung der Formel 1 beschreibt, geht klar hervor, daß es sich dabei um die β-Modifikation und nicht um die α-Modifikation der Verbindung (I) handelt. Die β-Modifikation wird demgemäß durch einen Lösungsmittelfinish mit Chlorbenzol als Lösungsmittel erhalten.

Es wurde nun gefunden, daß man überraschenderweise die α-Modifikation des cis-Isomeren zum Pigmentieren von Polyolefinen bei den praxisüblichen Anwendungstemperaturen von 200 bis 270 °C einsetzen kann, ohne daß eine Phasenumwandlung in die gelbstichig-rote β-Modifikation erfolgt.

Gegenstand der Erfindung ist die Verwendung der α-Modifikation von cis-Naphthoylen-bis-benzimidazol zum Pigmentieren von Polyolefinen.

Man erhält farbstarke rote Färbungen von vorzüglicher Lichtechtheit, wobei die Färbungen unter den für die jeweiligen Polyolefine praxisüblichen Anwendungsbedingungen thermostabil sind.

Geeignete Polyolefine für die erfindungsgemäße Verwendung sind beispielsweise Polyäthylen, Polypropylen, Polybut-1-en, Mischpolymerisate von Ethen und Propen sowie Mischpolymerisate von Ethen oder Propen oder Ethen und Propen mit untergeordneten Anteilen an mindestens einem weiteren polymerisierbaren Olefin. Geeignet sind auch Gemische aus mindestens zwei der vorstehenden Polyolefine. Bevorzugte Polyolefine sind HD-Polyäthylen, LD-Polyäthylen und Polypropylen, insbesondere Polypropylen für die Spinnfärbung. So ist die α-Modifikation in Polypropylen unter standardisierten Prüfbedingungen (DIN 53 772) bis 290 °C thermostabil. In Polyäthylen, das in der Praxis bei 200 bis 250 °C verarbeitet wird, ist die α-Modifikation bis 270 °C thermostabil.

Die zu pigmentierenden Polyolefine können außerdem übliche Hilfsmittel enthalten, beispielsweise Stabilisatoren, wie Antioxidantien und UV-Stabilisatoren, Füllstoffe und Farbmittel, wie andere Pigmente, insbesondere Weißpigmente.

Die α-Modifikation des cis-Isomeren der Formel (I) ist durch ein Röntgenbeugungsspektrum charakterisiert, das bei Verwendung von Cu-$K_\alpha$-Strahlung Reflexe bei folgenden Beugungswinkeln 2 $\vartheta$ aufweist (vgl. beiliegende Figur):

7,20 (65); 10,90 (45); 11,90 (95); 14,30 (10); 23,55 (25); 25,0 (100) und 27,35 (35); die Zahlen in Klammern

geben jeweils die prozentuale relative Intensität der Reflexe an.

Die Herstellung der α-Modifikation von (I) kann nach an sich üblichen Methoden erfolgen. Sie kann beispielsweise nach dem in der DE-A-28 09 877 (US-A-4,181,805) beschriebenen Verfahren hergestellt werden, das ein besonders reines Pigment liefert. Dabei wird die in konzentrierter Kalilauge gelöste Kaliumhydroxyd-Additionsverbindung von (I) mit Ätznatron ausgesalzen und das isolierte Produkte anschließend durch Eintragen in Wasser zu der α-Modifikation von (I) hydrolysiert. Bevorzugt erfolgt die Herstellung analog dem in der deutschen Auslegeschrift Nr. 15 69 736 (US-A-3,865,829) beschriebenen Verfahren, bei dem das bei der Umsetzung von Naphthalin-1,4,5,8-tetracarbonsäure mit 1,2-Diaminobenzol entstandene Isomerengemisch zunächst in äthanolischer Kalilauge unter Bildung der Kaliumhydroxyd-Additionsverbindungen der Isomeren umgesetzt wird, die schwerlösliche Additionsverbindung des trans-Isomeren bei niedriger Temperatur abgetrennt wird und aus der Lösung der Additionsverbindung von (I) nach Abdestillieren des Äthanols durch Säurezugabe die α-Modifikation von (I) ausgefällt wird. Vorzugsweise wird das Verfahren so durchgeführt, daß die gelöste Additionsverbindung durch Verringerung der Kaliumhydroxyd-Konzentration der Lösung unter Säurezugabe bei 50 - 100 °C, insbesondere bei 60 bis 80 °C, hydrolysiert wird und die α-Modifikation von (I) aus der noch alkalischen Suspension heiß filtriert, dann mit heißer Lauge sowie mit heißem Wasser gewaschen und anschließend getrocknet wird. Besonders leicht dispergierbare Pigmente erhält man, wenn bei diesem Verfahren die Säurezugabe möglichst rasch erfolgt.

Bei der für die Pigmentierung von Polyolefinen verwendeten α-Modifikationen von (I) kann es sich sowohl um das 100%ige cis-Isomere als auch um Gemische des cis-Isomeren mit einer begrenzten Menge an trans-Isomerem handeln. Der Anteil des trans-Isomeren soll so gering sein, daß der Einbau des trans-Isomeren in das Kristallgitter des cis-Isomeren der α-Modifikation weitgehend noch erfolgt.

Da die völlige Entfernung des trans-Isomeren wegen der Restlöslichkeit der Kaliumhydroxyd-Additionsverbindung des trans-Isomeren in äthanolischer Kalilauge im Rahmen der Isomerentrennung wirtschaftlich sehr aufwendig ist, wird auf den Einsatz der 100%igen cis-Verbindung in der Regel verzichtet. Die thermische Stabilität der α-Modifikation des cis-Isomeren in Polyolefinen wird aber nicht oder kaum von dem darin enthaltenen Anteil an trans-Isomerem beeinflußt. Der Anteil des trans-Isomeren kann maximal etwa 20 Gew.-% betragen. Bevorzugt ist der Anteil an trans-Isomerem 3 bis 15 Gew.-%, insbesondere 3 bis 10 Gew.-%.

Die Pigmentierung von Polyolefinen mit der α-Modifikation von (I) erfolgt bevorzugt in der praxisüblichen Weise, indem man zunächst eine in der Regel 40 bis 50 %ige Pigmentpräparation aus Pigment, Polyolefin und einem Polyolefinwachs herstellt. Dies kann z.B. durch Vermischen der Komponenten in einem Schnellmischer mit anschließendem Kneten in einem Doppelschneckenextruder und Weiterverarbeiten zu einem hochpigmentierten Granulat erfolgen. Das Polyolefinwachs hat einen niedrigeren Polymerisationsgrad als das Polyolefin und kann vom selben Typ, d.h. aus gleichen Monomeren aufgebaut wie das Polyolefin, oder von einem anderen Typ sein. Bevorzugt ist das Polyolefinwachs vom gleichen Typ wie das Polyolefin. Präparationen für die Polypropylenspinnfärbung bestehen in der Regel aus 30 bis 40 % Pigment, 10 bis 40 % Polypropylenwachs und 20 bis 60% Polypropylen. Die Einfärbung von Polyolefinen mit der Pigmentpräparation erfolgt in der praxisüblichen Weise durch Aufschmelzen des Polyolefins bei etwa 200 bis 270 °C unter Zugabe der Pigmentpräparation und anschließender Verarbeitung. Die optimale Verarbeitungstemperatur liegt bei Polyäthylen im allgemeinen etwas niedriger als bei Polypropylen.

Der Vorteil des Einsatzes der blaustichig-roten α-Modifikation von (I) gegenüber der bisher nur verwendeten gelbstichig-roten β-Modifikation bei der Pigmentierung von Polyolefinen besteht einerseits in dem geringeren wirtschaftlichen Aufwand. So erfordert die Phasenumwandlung von der α-Modifikation zur β-Modifikation in der Regel den Einsatz von aromatischen Lösungsmitteln, wie Chlorbenzol. Der Einsatz von derartigen Lösemitteln ist bei der Herstellung der α-Modifikation nicht erforderlich. Auf der anderen Seite entfallen damit auch ökologische und toxikologische Probleme, die bei der Handhabung und dem Recycling derartiger Betriebsstoffe zu lösen sind. Gleichzeitig mit der Phasenumwandlung tritt in dem bekannten Verfahren mit der Phasenumwandlung eine Kornvergröberung des Pigments auf, die zu einer geringeren Farbstärke führt. Bei der erfindungsgemäßen Verwendung wird eine Kornvergröberung vermieden und eine optimale Farbstärke erreicht.

Der Einsatz der α-Modifikation von (I) kann als Pigment vorteilhaft in allen Polyolefinen und Präparationen mit Polyolefinen erfolgen, bei denen keine Modifikationsumwandlung des Pigments erfolgt. Bevorzugt läßt es sich für die Pigmentierung von Polyolefinen in der Masse einseten, wobei die Polyolefinmassen in üblicher Weise zu Granulat, zu Extrusionsartikeln, wie Stangen, Platten oder Hohlkörpern, zu Spritzgußformteilen oder zu Spinnfasern verarbeitet werden können. Bevorzugt ist die Verwendung der α-Modifikation von (I) bei der Spinnfärbung von Polypropylen.

Die in den folgenden Beispielen angeführten Teile und Prozente beziehen sich auf das Gewicht.

Beispiele

1a) Herstellung der $\alpha$-Modifikation des Pigments (I):

Nach üblicher Umsetzung von Naphthalin-1,4,5,8-tetracarbonsäure mit 1,2-Diaminobenzol, anschließender Umsetzung mit äthanolischer Kalilauge und Abtrennen der schwerlöslichen Kaliumhydroxyd-Additionsverbindung von trans-Naphthoylen-bis-benzimidazol (C.I. Pigment Orange 43) bei 30 - 35° C erhält man eine Lösung der Kaliumhydroxyd-Additionsverbindungen von 173 Teilen cis-Verbindung gemäß Formel (I) und 15 Teilen trans-Verbindung (C.I. Pigment Orange 43) in äthanolischer Kalilauge, die aus 595 Teilen KOH, 2800 Teilen Äthanol und 805 Teilen Wasser besteht. Unter gleichzeitiger Zugabe von 500 Teilen Wasser wird das Äthanol abdestilliert. Nach weiterer Zugabe von Wasser wird die Lösung der Kaliumhydroxyd-Additionsverbindungen heiß geklärt und der Klärrückstand mit 500 Teilen 25 %iger wäßriger Kalilauge gewaschen. In die vereinigten Filtrate läßt man bei 70 bis 80° C innerhalb von 10 Minuten 856 Teile 31 %ige Salzsäure zulaufen. Nach einstündigem Nachrühren bei 70 bis 80° C wird die alkalische Suspension abgesaugt. Der Filterkuchen wird zunächst mit verdünnter wäßriger Kalilauge gewaschen und dann mit heißem Wasser neutral gewaschen. Nach Trocknen des Pigments bei 80° C wird es auf einer Prallstrahlmühle gemahlen. Man erhält 181 Teile der $\alpha$-Modifikation von cis-Naphthoylen-bis-benzimidazol, das etwa 8 % des trans-Isomeren (C.I. Pigment Orange 43) enthält. Die beiliegende Figur zeigt das Röntgenbeugungsspektrum dieses Pigments, gemessen mit dem Diffraktometer D 500 von Siemens unter Verwendung von CU-$K_{\alpha}$-Strahlung; das Spektrum gibt die gemessenen Röntgenintensitäten (Zählraten) der Reflexe in Abhängigkeit der Beugungswinkel 2 $\vartheta$ wieder.

Das Pigment ergibt bei der Pigmentierung von Polyolefinen in der praxisüblichen Weise farbstarke rote Färbungen, die bei 1%iger Pigmentierung eine Lichtechtheit von 7 bis 8 aufweisen. Das Pigment ist in Polyolefinen sehr gut dispergierbar und weist eine sehr hohe Hitzebeständigkeit auf. In Polypropylen ist es bis 290° C nach DIN 53 772 thermostabil und zeigt auch bei 300° C keinen Farbtonumschlag in den gelbstichig-roten Bereich, der für die Umlagerung in die $\beta$-Modifikation charakteristisch ist. In Polyäthylen ist das Pigment bis 270° C thermostabil und zeigt ab 280° C eine Farbtonverschiebung zu einem gelbstichig-roten Farbton.

1b) Herstellung einer Polyäthylen-Pigmentpräparation:

40 Teile des nach Beispiel 1a) erhaltenen gemahlenen Pigments und 60 Teile eines Gemischs aus Polyäthylenwachs und Polyäthylen werden in einem Mischer gemischt, daraufhin in einem Doppelschneckenextruder bei 170° C dispergiert und anschließend zu einem Granulat verarbeitet.

1c) Polyäthylen-Pigmentierung:

1,25 Teile der nach Beispiel 1b) erhaltenen Pigmentpräparation und 98,75 Teile Polyäthylen werden in einem Mischer gemischt und bei 230° C auf einer Spritzgußmaschine zu Formteilen verarbeitet.

2a) Herstellung des Pigments (I) in der $\alpha$-Modifikation:

Analog Beispiel 1a) erhält man nach Umsetzung von Naphthalin-1,4,5,8-tetracarbonsäure mit 1,2-Diaminobenzol, anschließendem Umsetzen mit äthanolischer Kalilauge und Abtrennen des Hauptanteils der schwerlöslichen Kaliumhydroxyd-Additionsverbindung von trans-Naphthoylen-bisbenzimidazol (C.I. Pigment Orange 43) bei 15 - 20° C eine Lösung der Kaliumhydroxyd-Additionsverbindungen von 182 Teilen cis-Naphthoylen-bis-benzimidazol und 6 Teilen der entsprechenden trans-Verbindung in äthanolischer Kalilauge, die aus 595 Teilen Kaliumhydroxyd, 2800 Teilen Äthanol und 805 Teilen Wasser besteht. Nach Abdestillieren des Äthanols unter gleichzeitiger Zugabe von 500 Teilen Wasser wird die Lösung nochmals mit Wasser versetzt, erhitzt und heiß filtriert. Der Klärrückstand wird mit 500 Teilen 25 %iger wäßriger Kalilauge gewaschen und die vereinigten Filtrate bei 60 -70° C innerhalb von 12 Minuten mit 856 Teilen 31 %iger Salzsäure versetzt. Nach einstündigem Nachrühren bei 60 bis 70° C wird die alkalische Suspension abgesaugt, der Filterkuchen mit verdünnter wäßriger Kalilauge gewaschen, mit heißem Wasser neutralgewaschen, bei 80° C getrocknet und auf einer Prallstrahlmühle gemahlen. Man erhält 182 Teile der $\alpha$-Modifikation von cis-Naphthoylen-bis-benzimidazol, das etwa 3 % der entsprechenden trans-Verbindung enthält. Das erhaltene Pigment entspricht in seinen coloristischen Eigenschaften dem aus Beispiel 1a).

2b) Herstellung einer Polypropylen-Pigmentpräparation:

40 Teile des nach Beispiel 2a) erhaltenen gemahlenen Pigments und 60 Teile eines Gemischs aus Polypropylenwachs und Polypropylen werden in einem Mischer gemischt, daraufhin in einem Doppelschneckenextruder bei 200° C dispergiert und anschließend zu einem Granulat verarbeitet.

2c) Spinnfärbung von Polypropylen:

2,5 Teile der nach Beispiel 2b) erhaltenen Pigmentpräparation und 97,5 Teile isotaktisches Polypropylen (Fasertype) werden in einem Spinnextruder bei 270° C aufgeschmolzen und zu Fasern versponnen.

3) Verfährt man analog Beispiel 1a) verwendet jedoch anstelle der Lösung der Kaliumhydroxyd-Additionsverbindungen von cis- und trans-Isomeren eine Lösung der Kaliumhydroxyd-Additionsverbindungen von 188 Teilen des reinen cis-Isomeren von Naphthoylen-bis-benzimidazol in äthanolischer Kalilauge der genannten Zusammensetzung und arbeitet analog Beispiel 1a) auf, dann erhält man ein cis-Naphthoylen-bis-benzimidazol der α-Modifikation, das in seinen coloristischen Eigenschaften dem Pigment aus Beispiel 1a) entspricht.

4) Verfährt man analog Beispiel 1a), verwendet jedoch anstelle der Lösung der Kaliumhydroxyd-Additionsverbindungen von 173 Teilen des cis-Isomeren und 15 Teilen des trans-Isomeren von Naphthoylen-bis-benzimidazol eine Lösung von 160 Teilen des cis-Isomeren und 28 Teilen des trans-Isomeren von Naphthoylen-bis-benzimidazol in äthanolischer Kalilauge der genannten Zusammensetzung und arbeitet analog Beispiel 1a) auf, so erhält man ein Pigment des cis-Isomeren in der α-Modifikation, das etwa 15 % des trans-Isomeren enthält. Das Pigment entspricht in seinen coloristischen Eigenschaften weitgehend dem nach Beispiel 1a) erhaltenen Pigment.

## Ansprüche

1. Verwendung der α-Modifikation von cis-Naphthoylen-bis-benzimidazol zum Pigmentieren von Polyolefinen.

2. Verwendung nach Anspruch 1, dadurch gekennzeichnet, daß das Polyolefin ein Polyolefin oder ein Gemisch von mindestens zwei Polyolefinen aus der Gruppe Polyäthylen, Polypropylen, Mischpolymerisate von Ethen und Propen sowie Mischpolymerisate von Ethen oder Propen oder Ethen und Propen mit untergeordneten Anteilen an mindestens einem weiteren polymerisierbaren Olefin ist.

3. Verwendung nach Anspruch 2, dadurch gekennzeichnet, daß das Polyolefin ein Polyäthylen, ein Polypropylen, ein Mischpolymerisat von Ethen und Propen oder ein Gemisch von mindestens zwei dieser Polyolefine ist.

4. Verwendung nach Anspruch 3, dadurch gekennzeichnet, daß das Polyolefin ein Polypropylen für Spinnmassen ist.

5. Verwendung nach mindestens einem der Ansprüche 1 bis 4, dadurch gekennzeichnet, daß das Pigment der α-Modifikation bis zu 20 Gew.-% des trans-Naphthoylen-bis-benzimidazols enthält.

6. Verwendung nach Anspruch 5, dadurch gekennzeichnet, daß das Pigment neben dem cis-Isomeren 3 - 10 Gew.-% des trans-Isomeren enthält.

7. Verwendung nach mindestens einem der Ansprüche 1 bis 6, dadurch gekennzeichnet, daß man als cis-Naphthoylenbis-benzimidazol in der α-Modifikation ein Pigment verwendet, das aus einer Lösung seiner Kaliumhydroxyd-Additionsverbindung in konzentrierter wäßriger Kalilauge bei 60 - 80 °C durch rasche Zugabe einer für die Neutralisation nicht ausreichenden Säuremenge ausgefällt und anschließend isoliert worden ist.

8. Verfahren zum Pigmentieren von Polyolefinen in der Masse, dadurch gekennzeichnet, daß die α-Modifikation von cis-Naphthoylen-bis-benzimidazol zunächst mit Polyolefin und einem Polyolefinwachs vermischt und geknetet wird und danach die erhaltene Polyolefinpigmentpräparation mit einem aufgeschmolzenen Polyolefin vermischt und das pigmentierte Gemisch anschließend granuliert, extrudiert, spritzgegossen oder zu Spinnfasern verarbeitet wird.

9. Verfahren nach Anspruch 8, dadurch gekennzeichnet, daß das Polyolefin Polyäthylen, Polypropylen, ein Mischpolymerisat von Ethen und Propen sowie ein Mischpolymerisat von Ethen oder Propen oder Ethen und Propen mit untergeordneten Anteilen an mindestens einem weiteren polymerisierbaren Olefin oder ein Gemisch von mindestens zwei der Polyolefine ist.

10. Verfahren nach Anspruch 9, dadurch gekennzeichnet, daß die Pigmentpräparation mit aufgeschmolzenem Polyäthylen bei 200 bis 270 °C oder mit aufgeschmolzenem Polypropylen bei 200 bis 290 °C vermischt und geknetet wird.

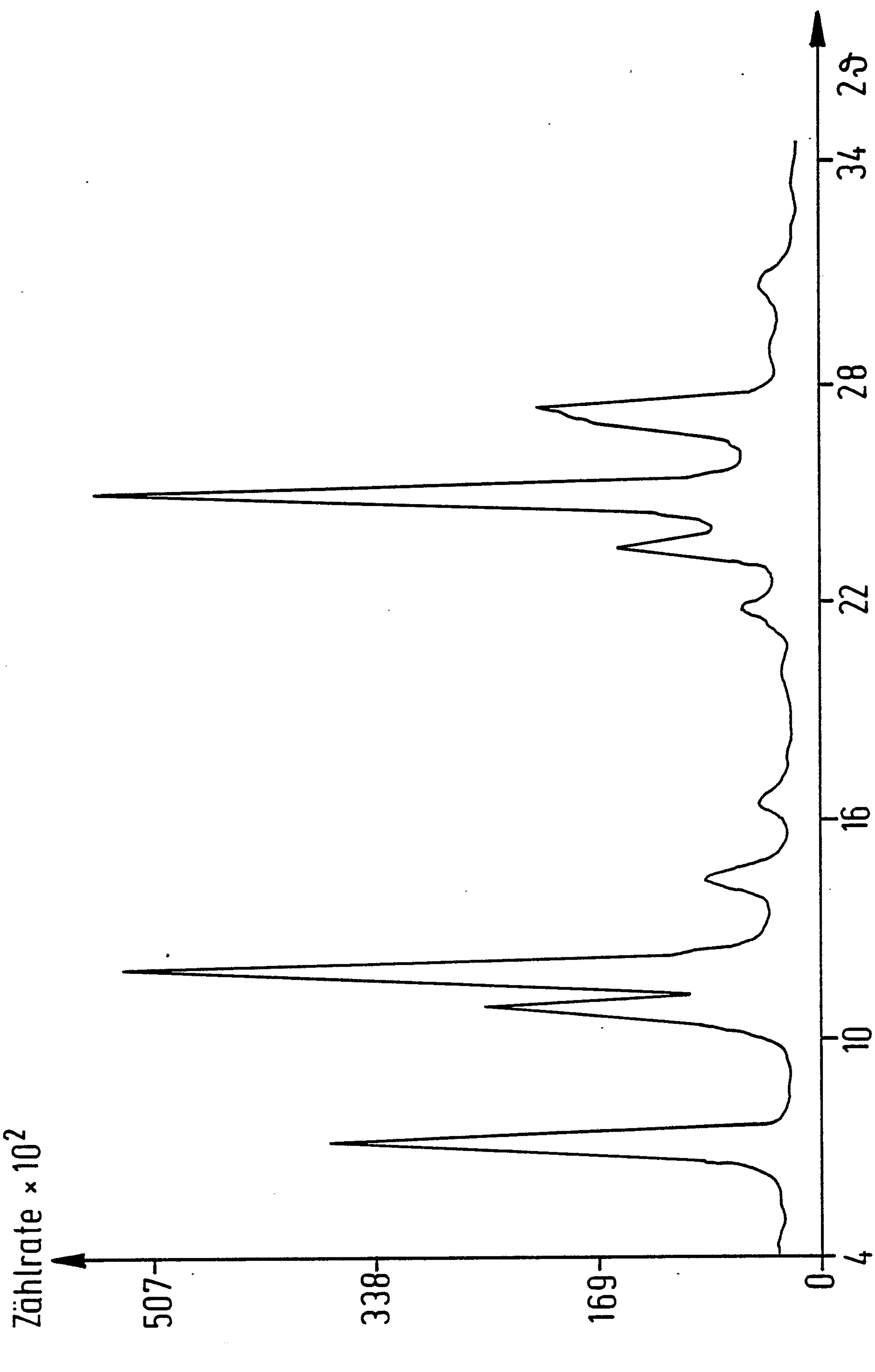
Zählrate × $10^2$
507
338
169
0
4
10
16
22
28
34
2ϑ